## Europäisches Patentamt
## European Patent Office
## Office européen des brevets

(19)

(11) Numéro de publication: **0 043 741**
**B1**

(12) **FASCICULE DE BREVET EUROPEEN**

(45) Date de publication du fascicule du brevet: **22.02.84**

(51) Int. Cl.³: **B 23 Q 15/013, B 23 Q 35/10**

(21) Numéro de dépôt: **81400758.9**

(22) Date de dépôt: **13.05.81**

(54) Procédé d'usinage de surfaces de révolution évolutives et machine-outil à commande numérique pour usinage de telles surfaces.

(30) Priorité: **20.05.80 FR 8011243**

(43) Date de publication de la demande:
**13.01.82 Bulletin 82/2**

(45) Mention de la délivrance du brevet:
**22.02.84 Bulletin 84/8**

(84) Etats contractants désignés:
**AT CH DE GB IT LI SE**

(56) Documents cités:
**DE - C - 767 950**
**FR - A - 1 102 712**
**GB - A - 934 316**
**US - A - 3 689 947**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Le Guy, Bernard**
**14, rue Marcel-Pagnol Le Haut Buc**
**F-78530 Buc (FR)**
Inventeur: **Pipponiau, Bernard**
**130, route de la Reine**
**F-92100 Boulogne Billancourt (FR)**

(74) Mandataire: **Srour, Elie et al,**
**8 & 10 Avenue Emile Zola**
**F-92109 Boulogne Billancourt (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Procédé d'usinage de surfaces de révolution évolutives et machine-outil à commande numérique pour usinage de telles surfaces

La présente invention se rapporte à un procédé d'usinage de surfaces de révolution évolutives et à une machine-outil à commande numérique, programmée pour l'usinage de telles surfaces, en particulier un tour d'usinage de pièces telles que des pistons de moteurs à combustion interne (usinage de la surface périphérique), ou de gabarits de reproduction pour l'usinage de tels pistons, ou des cames tri-dimensionnelles.

Dans les deux premières applications, les surfaces à usiner ont des sections droites sensiblement elliptiques et évolutives suivant la position axiale de chaque section.

Dans les trois applications, les génératrices des surfaces de révolution peuvent être rectilignes ou curvilignes, convexes ou concaves, ou polygonales.

Le procédé selon l'invention est présenté par le contenu de la revendication 1 dont le préambule a été rédigé en tenant compte du document FR—A—1.102.712.

Selon ce procédé, on définit la surface à engendrer elle-même, et ceci à l'aide d'une définition mathématique nécessitant un faible nombre de données. Ainsi, la surface ayant été très simplement programmée, indépendamment de la manière dont l'outil l'engendrera, il est possible, sans intervention de programmation, de changer le pas de l'hélice, par exemple en introduisant dans le système de gestion des données la nouvelle valeur de celui-ci.

Selon un aspect de l'invention, la surface à engendrer est définie par "déformation" géométrique d'un cylindre de rayon R. Cette déformation se caractérise par une quantité algébrique Fr (Z, A) soustraite au rayon R tenant compte de la "déformation" du profil, Fp, et de l'ovalité de la section, Fo. Pour obtenir une déformation de la génératrice du cylindre, il suffit de disposer d'une fonction Fp (Z), Z étant la cote au niveau d'une section courante, cote mesurée par projection sur l'axe du cylindre ainsi déformé.

La fonction Fp (Z), fonction dite de "profil", peut être définie mathématiquement ou par un nombre limité de points entre lesquels la courbe décrite sera obtenue par une interpolation, linéaire de préférence, sans exclure tout autre mode d'interpolation ne nécessitant pas un volume ou un temps de calcul trop important.

Si l'on n'introduit pas d'autre type de "déformation", les sections du cylindre ainsi déformé resteront circulaires. Pour obtenir des sections autres que circulaires, on ajoute algébriquement à la fonction Fp (Z) une fonction Fo (Z, A), fonction dite "d'ovalité" dépendant de Z et de A, A étant l'angle variant entre 0 et 360 degrés et permettant de repérer, à partir d'un rayon origine, le rayon courant sur la section de cote Z considérée. Ainsi Fr (Z, A) devient une fonction de Z et de A et s'écrit:

$$Fr (Z, A) = Fp (Z) + Fo (Z, A).$$

Selon un autre aspect de l'invention la fonction Fo (Z, A) est définie en utilisant une série de Fourier limitée à 8 harmoniques (rang 8) par exemple. Dans cette série de Fourier les coefficients $a_i$ sont des fonctions de Z et de A. Si l'on désire décrire des sections possédant au moins un axe de symétrie, on peut considérer une série de Fourier ne comportant que des cosinus: Fo (A), pour une cote Z donnée, s'écrira:

$$Fo (A) = \sum_{i=1}^{i=n} a_i (1 - \cos iA)$$

$$Fo (A) = \sum_{i=1}^{i=n} a_i - \sum_{i=1}^{i=n} a_i \cos iA$$

La convention d'écriture conduisant à la présence du terme

$$\sum_{i=1}^{i=n} a_i$$

n'est pas indispensable; elle permet simplement d'obtenir Fo (Z, O)=0 et de ce fait Fr (Z, O)=Fp (Z), ce qui implique que la déformation de la génératrice du cylindre de base correspondant à l'angle A=0 est due uniquement à la fonction de profil.

Pour définir Fp (Z) on a vu qu'il suffit d'utiliser un nombre limité de points (50 au maximum) entre lesquels on fait une interpolation, linéaire de préférence. Pour définir Fo (Z, A) dans une section courante, il suffit de définir les coefficients de Fourier. Pour obtenir la définition Fo (Z, A) sur toute la surface on procède par interpolation, en fixant la valeur des coefficients de Fourier dans certaines sections privilégiées de cotes ou niveaux déterminés; entre ces sections la valeur des coefficients de Fourier sera obtenue par interpolation linéaire, de préférence entres les coefficients des harmoniques de même rang. La surface ainsi définie est continue, car aux points de cassure de la fonction Fp (Z) on choisit une interpolation de raccordement. La continuité est assurée globalement si l'on prend une interpolation parabolique pour Fp (Z), même si l'on conserve l'interpolation linéaire pour les coefficients de Fourier.

L'intérêt du type de définition de surface décrit est triple:

a) peu de données sont nécessaires pour programmer une surface (environ 5 à 10 valeurs de profils avec leurs cotes correspondantes: jusqu'à 50 valeurs afin d'atténuer la discontinuité, aux points de cassures de la fonction Fp (Z) dans le cas de l'interpolation linéaire, et ce pour une valeur de Z voisine de 200 mm, par exemple), et de de 1 à 8 coefficients d'harmonique (rangs 1 à 8) dans 4 à 10 sections privilégiées avec les cotes correspondantes pour définir un piston de moteur à combustion interne, soit environ 800 nombres au lieu de 200 000 à 300 000 nombres pour définir une même surface avec les procédés classiques connus actuellement pour obtenir une précision comparable.

b) la surface est définie indépendamment de la trajectoire de l'outil, ce qui permet de faire varier les vitesses de rotation et d'avance, et ainsi de décrire une hélice de pas quelconque en n'intervenant que sur une seule donnée de programmation, le nombre de définition de la valeur du pas d'avance.

c) le système élabore en temps réel la fonction Fo (Z, A) par interpolation des valeurs des coefficients de Fourier, et peut très facilement corriger ceux-ci pour tenir compte de la fonction de transfert de l'asservissement de position qui règle la distance ou rayon, de l'outil à l'axe de la pièce après un test d'étalonnage.

L'invention a également pour objet une machine-outil pour la mise en oeuvre du procédé selon la revendication 1 qui est présentée par le contenu de la revendication 4 et dont le préambule a été rédigé en tenant compte du document FR—A—1.102.712. Les moyens moteurs porte-outils utilisés par l'invention sont révélés par le document GB—A—934.316 qui constitue l'état de la technique le plus pertinent relatif à ces moyens.

La machine comporte, sur un bâti fixe, un porte-pièce mû en rotation autour de son axe, et son système d'entraînement; un porte-outils mobile sur un axe perpendiculaire à l'axe de la pièce; des moyens d'entraînement du porte-outils sur cet axe et des moyens de commande et de contrôle de ce déplacement; l'ensemble de l'outil et de sa commande en déplacement est monté sur une table se déplaçant en translation longitudinale parallèlement à l'axe de la pièce, derrière la pièce à position fixe et cette translation est synchronisée avec la rotation de la pièce.

Cet ensemble mécanique simple reproduisant les paramètres de génération de la surface à usiner est complété par un codeur ou capteur associé au mouvement de rotation de la pièce qu'il mesure et qui détermine la transmission par le système de commande et de synchronisation, par un asservissement de position, du troisième paramètre, c'est-à-dire la distance outil-pièce, à partir de l'outil mobile, sous l'action de consignes élaborées à partir des données géométriques à reproduire.

L'ensemble de commande comporte le système de calcul et de synchronisation, un système de commande des passes successives ainsi qu'un système de type classique de correction de position d'origine du diamètre de pièce. Il reçoit directement ou à partir d'un système de transmission de données, les données géométriques, dans les sections privilégiées de la surface à usiner et produit une consigne d'asservissement de position de l'outil mobile. Il comporte notamment, monté sur l'axe de la broche, le codeur précité du type incrémental angulaire émettant des impulsions totalisées en mémoire dans le système de calcul. Il est à faible nombre de points, de l'ordre de 840.

Ce codeur solidaire de l'entraînement en rotation de la pièce a une triple fonction le synchronisation des calculs et consignes, de repérage angulaire de la rotation de la pièce, de synchronisation de la vitesse d'avance de la table porte-outils. La synchronisation des calculs s'effectue à chaque transition, ou front d'impulsion du codeur.

Ainsi, la synchronisation des calculs et des envois de consignes par les transitions du codeur implique que ces calculs ne s'effectuent que sur des valeurs angulaires choisies pour être des nombres entiers. La précision d'acquisition de la valeur A de l'angle est déterminée par la seule précision du codeur et est indépendante du nombre de points; ceci permet l'emploi d'un codeur à faible nombre de points, plus économique et plus fiable.

Chacune des impulsions du codeur excite un oscillateur sinusoïdal synchronisable OSR, modulable en fréquence et redéclenchable. Ainsi se trouvent générées 8 fonction sinusoïdales rigoureusement en phase et correspondant aux différents termes de la fonction de Fourier.

Leurs amplitudes sont alors multipliées numériquement par une quantité fonction des données géométriques de base, de A et de la cote Z, dont la définition assure la continuité de la surface à engendrer.

La fonction d'ovalité Fo (Z, A) est l'addition créée analogiquement des termes générés précédemment.

La fonction de profil Fp (Z) est obtenue uniquement par la création d'impulsions, calibrées en amplitude et en durée, obtenues par un calcul d'interpolation, linéaire de préférence, entre deux points de définition du profil. Une impulsion de raccordement au niveau de chaque cote Z de définition de profil en atténue la discontinuité.

La mise au diamètre primitif de la pièce à usiner (c'est-à-dire la position de l'outil par rapport à l'axe pièce ou valeur de rayon R) s'effectue simplement par l'envoi d'un nombre donné d'impulsions calibrées.

Ces signaux fonction Fo (Z, A)+fonction Fp (Z)=Fr (Z, A) représentent la consigne de l'asservissement en vitesse et position du porte-outils sur son axe X. L'ensemble électronique correspondant est formé d'un amplificateur à large bande passante d'un actionneur, de capteurs (vitesse et position) et de leurs électroniques de conversion associées.

La cote Z de translation de la table est obtenue par un ensemble amplificateur-moteur (pas à pas ou courant continu) piloté de façon synchrone par la rotation de l'axe porte-pièce (à partir du codeur 840 points auquel est associé un système de conversion électronique). Sur l'axe Z est calé un codeur rotatif impulsionnel comportant 400 points ayant une triple fonction:

— contrôle de la cote Z réelle à chaque instant avec détection d'une éventuelle désynchronisation,
— envoi de consignes de modification de vitesse de rotation $\theta$, si nécessaire, en fonction de la pièce à usiner (piston de moteur avec insert en matière différente),
— détection de fin de passe avec inversion de sens de déplacement Z, et/ou arrêt fin de cycle.

La présence de ce codeur évite la mémorisation de la vitesse de rotation de l'axe porte-pièce ($\theta$) en fonction de la cote Z, occasionnant un gain de mémoire, d'introduction de données et de temps de scrutation par la simple adjonction d'un séquenceur qui surveille en temps réel: cote Z et $\theta$.

Un dispositif de synchronisation général surveille et contrôle un temps réel toutes les fonctions de cette machine: génération des fonctions Fo (Z, A), Fp (Z), A, Z, $\theta$, et génère des informations de défaut de chaque sous-ensemble.

Les diverses fonctions sont réalisées à partir de microprocesseurs en tranches travaillant sur 16 ou 32 bits ce qui, compte tenu de la période d'échantillonnage très faible du système (330 $\mu s$), ne serait pas réalisable avec des techniques classiques de la commande numérique par calculateur en temps réel étant donné la nature et la complexité des signaux à générer.

L'invention sera maintenant décrite en se référant à une forme de réalisation préférée représentée à titre d'exemple sur le dessin annexé dans lequel:
— la figure 1 est une vue d'ensemble en perspective de la machine;
— la figure 2 est une coupe transversale par le plan axial du porte-outils;
— la figure 3 est une vue de détail en bout du porte-outils;
— la figure 4 est un tableau synoptique fonctionnel de la commande de la machine;
— la figure 5 est un tableau schématique du dispositif de calcul et de détermination des paramètres ainsi que de leurs entrées sur la machine.

D'une façon générale, la machine-outil est constituée à la façon d'un tour d'usinage destiné à l'usinage de surfaces de révolution évolutives, telles que pistons de moteurs à combustion interne ou cames tri-dimensionnelles.

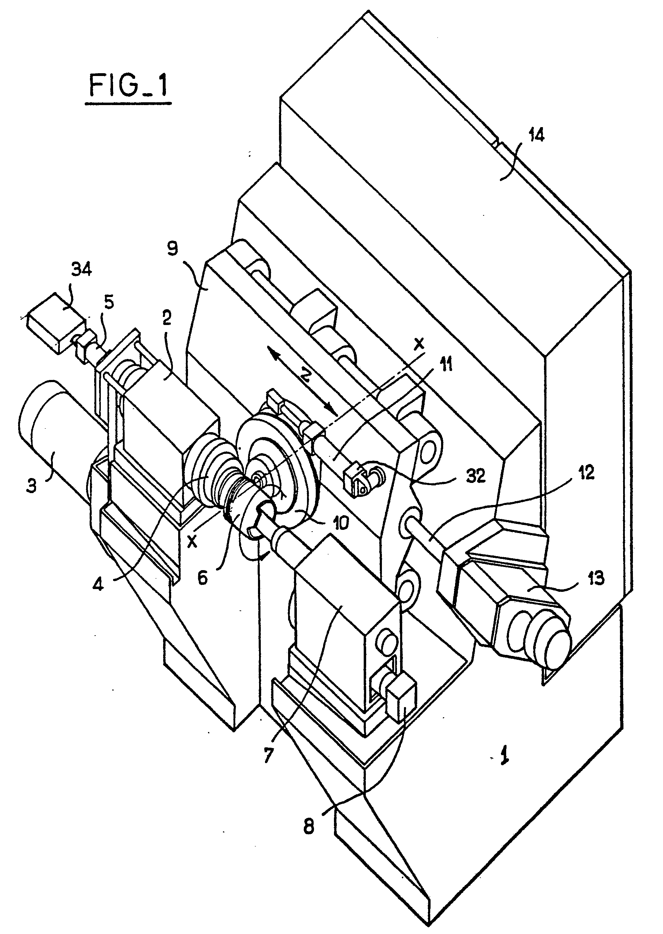

En se reportant à la figure 1, on voit que la machine comporte, sur un bâti monolithique en fonte 1:

— une broche 2 de rotation de la pièce, sur paliers hydrostatiques, équipée de sont moteur courant continu 3 en bout du bâti et de son mandrin à prise de pièce par adhérence, 4, muni d'un vérin d'éjection 5 de la pièce usinée 6, par exemple un piston de moteur;
— un système de bridage de pièce 7, commandé par vérins 8, qui peut être du type représenté et décrit dans le brevet français 70 43694 du 4 décembre 1970 et de son addition 71 42070 du 24 novembre 1971;
— une table de chariotage 9, à guidage sur glissières 9', à paliers hydrostatiques ou à patins, portant l'ensemble mobile porte-outils 10 à guidage hydrostatique porteur d'un outil de dégroississage et d'un outil de finition, le passage de l'un à l'autre s'effectuant par rotation d'un plateau au moyen d'un vérin de présentation d'outil 11. Le porte-outils est mobile selon l'axe des X perpendiculairement à l'axe de la broche au moyen d'un actionneur électro-magnétique. L'animation de la table est réalisée par vis-écrou à galets pré-contraints 12 et par un moteur à courant continu avec boîte de réduction 13.

A l'arrière de la machine est située une armoire des organes électronique et électrique de "consignes", de séquences et puissance 14.

En bout de l'arbre de la broche 2 est situé un codeur on capteur 34 émettant des signaux à intervalles réguliers pour servir de rythmeur au dispositif de commande.

Cet ensemble est complété à l'avant d'un pupitre de commande et d'introduction de données et de carters de protection, sur les côtés de groupes hydrauliques et, au centre, sous la pièce, d'un groupe d'arrosage à récupération de copeaux, ou d'une trémie déversant ceux-ci en caniveau. Ces organes accessoires n'ont pas été représentés, par souci de simplification et parce qu'ils ne formant pas partie de l'invention.

Cette machine comporte donc trois paramètres définissant la position pièce-outil, à savoir l'angle A d'orientation de la pièce à usiner au cours de sa rotation sur l'axe de la broche, de déplacement de la table de chariotage le long de l'axe Z et le déplacement du porte-outils le long de l'axe X perpendiculare au premier.

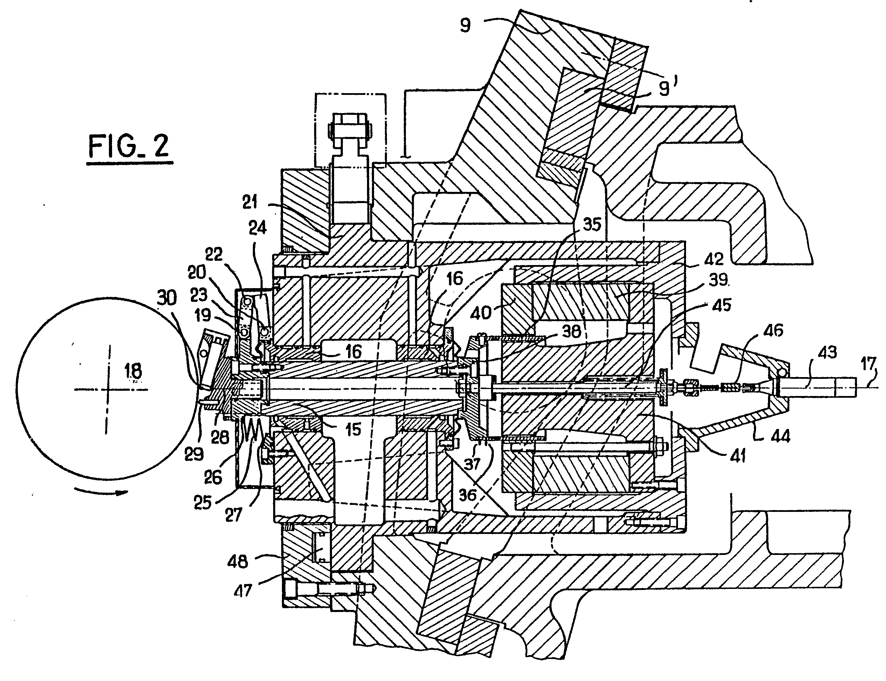

La ligne du porte-outils sera maintenant plus particulièrement décrite en se référant à la figure 2 qui en représente une coupe axiale.

Le corps du porte-outils est constitué par un barreau cylindrique tubulaire 15, guidé radialement dans deux paliers hydrostatiques 16, dont l'axe 17 est disposé perpendiculairement à l'axe broche porte-pièce 18 et situé dans un plan horizontal. Ce barreau est contenu dans un boîtier 21 lui-même cylindrique. A l'avant de ce barreau 15, côté pièce à usiner, est fixé un dispositif d'antirotation constitué par un compas articulé en trois points: l'un 19 solidaire du barreau 15, l'autre 20 solidaire du boîtier 21, le troisième 22 liant les deux branches 23 et 24 du compas, ou par un assemblage de disques métalliques formant soufflet 25 dont une extrémité 26 est liée au barreau 15 et l'autre 27 au boîtier 21.

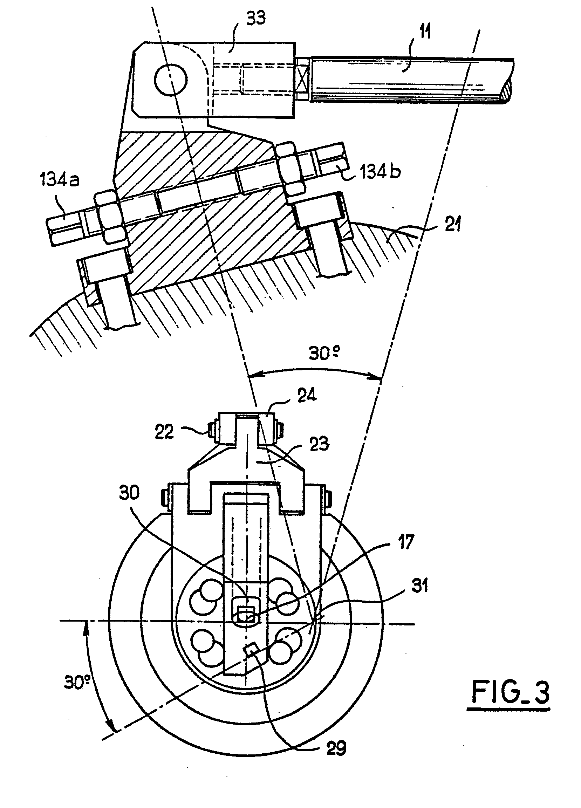

En avant de ce dispositif est fixé sur le barreau 15 le porte-outils 28 muni de ses deux outils, l'un de demi-finition 29, l'autre de finition 30, implantés entre eux avec un angle de 30° ayant pour sommet l'axe 31 du boîtier porte-outils 21 (figure 3).

L'ensemble du barreau 15 et de ses paliers est logé à l'intérieur du boîtier porte-outils 21 de façon à ce que l'axe 17 du barreau porte-outils 15 soit décalé, par exemple de 25 mm par rapport à l'axe 31 du boîtier 21. Cette disposition permet par rotation d'un angle de 30° du boîtier 21 de présenter l'un ou l'autre des outils 29, 30 en fonction du cycle d'usinage (figure 3).

La rotation de 30° du boîtier porte-outils 21 est obtenue par le vérin double effet 11 attelé, côté tige, à celui-ci par une crosse 33, le côté fond de ce vérin 32 étant lié à la table de chariotage 9 par un axe d'articulation. Des butés 134a et 134b limitent le mouvement.

La mise en mouvement axial du barreau porte-outils 15 est engendré par un organe électro-magnétique appelé "actionneur", recevant du système d'élaboration et de gestion de consigne un courant modulé en intensité.

L'actionneur, situé à l'intérieur du boîtier porte-outils 21 dans le prolongement du barreau porte-outils 15 et disposé concentriquement à celui-ci, est constitué d'une part par une bobine 35, recevant à ses bornes 36, 37 le courant de consigne, rendue solidaire du barreau porte-outils 15 par l'intermédiaire d'un porte-bobine 38, d'autre part par un circuit magnétique annulaire constitué d'un aimant 39 et de deux masses polaires 40 et 41, dans l'entrefer desquelles se meut la bobine 35. Cet ensemble magnétique est inséré dans une boîte 42, en matière amagnétique, solidaire du boîtier porte-outils 15.

Un capteur de positions et de vitesse 43 contrôlant à tout instant le déplacement du barreau porte-outils, a son corps fixé avec liberté axiale sur la boîte 42 par la lanterne 44, et sa partie mobile 45 liée au porte-bobine 38 par une bielle 46 rigide axialement.

Le boîtier porte-outils 21 est immobilisé, après rotation de 30° pour le choix de l'outil par des pistons simple effet 47 à commande hydraulique, logés dans une couronne 48 solidaire de la table 9.

La commande numérique de la machine est destinée à fournir pour chacune des valeurs A de l'angle de rotation de la pièce et Z du déplacement de la table de chariotage, une valuer X de position de l'outil sur l'axe 17.

Les valeurs A et Z sont fonctions des vitesses d'entraînement de la broche et de la table, vitesses en principe fixes et déterminées à l'avance selon des paramètres bien connus.

Comme il a été précédemment montré, l'on cherche à calculer à chaque instant la valeur de X considérée comme une fonction de deux termes, l'un $F_p(Z)$ représentant le profil, c'est-à-dire la courbure d'une génératrice et l'autre $F_o(Z, A)$ représentant l'ovalisation dans une section donnée de la pièce (que l'on considérera par la suite comme étant un piston) et en admettant au moins un axe de symétrie de cette section, cette fonction $F_o$ sera considérée comme une série de Fourier ne comportant que des cosinus, soit:

$$F_o(A) = \sum_{i=1}^{i=n} a_i(1 - \cos iA)$$

soit:

$$F_o(A) = \sum_{i=1}^{i=n} a_i - \sum_{i=1}^{i=n} a_i \cdot \cos iA$$

Chacun des coefficients $a_i$ dépend de la section Z, mais également de l'emplacement du point considéré sur cette section, donc de l'angle A. Chacun des coefficients $a_i$ représente donc une série de coefficients $a_{ij}$.

Ces différents coefficients sont introduits dans la mémoire de la machine et interviennent pour le calcul des valeurs $F_o(A)$ entre lesquelles les valeurs des points intermédiaires sont données par interpolation linéaire.

De même, le calcul étant opéré pour définir $F_p(Z)$ sur un nombre limité de points (50 au maximum), une interpolation linéaire de préférence donne une série de valeurs intermédiaires.

Entre deux points successifs il existe des valeurs différentes d'A et de Z, l'outil ayant avancé sur l'axe des Z et la pièce ayant tourné sur son axe, à un coefficient $a_{ij}$ fait suite un coefficient $a_{i,j}$, qui tient compte de ces avances de A et de Z.

La synchronisation ainsi que les déclenchements des circuits de calcul sont réalisés à partir du codeur ou capteur anguliare incrémental 34 calé sur l'axe d'entraînement en rotation de la pièce. Ce codeur génère 840 impulsions par tour, nombre qui est égal au PPCM (plus petit commun multiple) des 8 premiers nombres entiers correspondant aux 8 harmoniques. A chaque front de signal du codeur sera engendré un signal propre à chaque harmonique. Ces signaux étant ainsi en phase et d'amplitude variable, la longueur du signal dépend du rang de l'harmonique considéré.

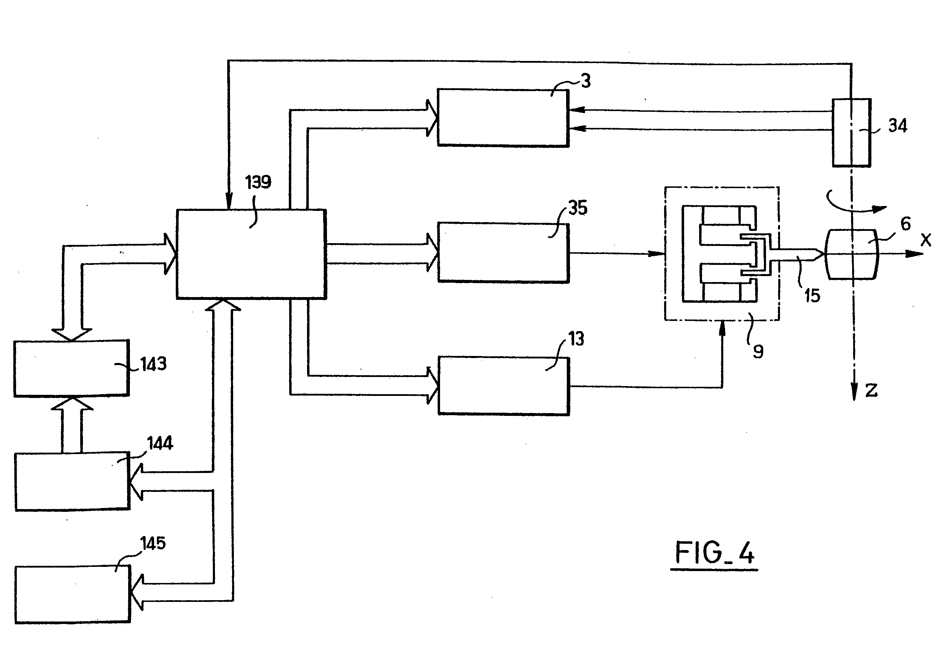

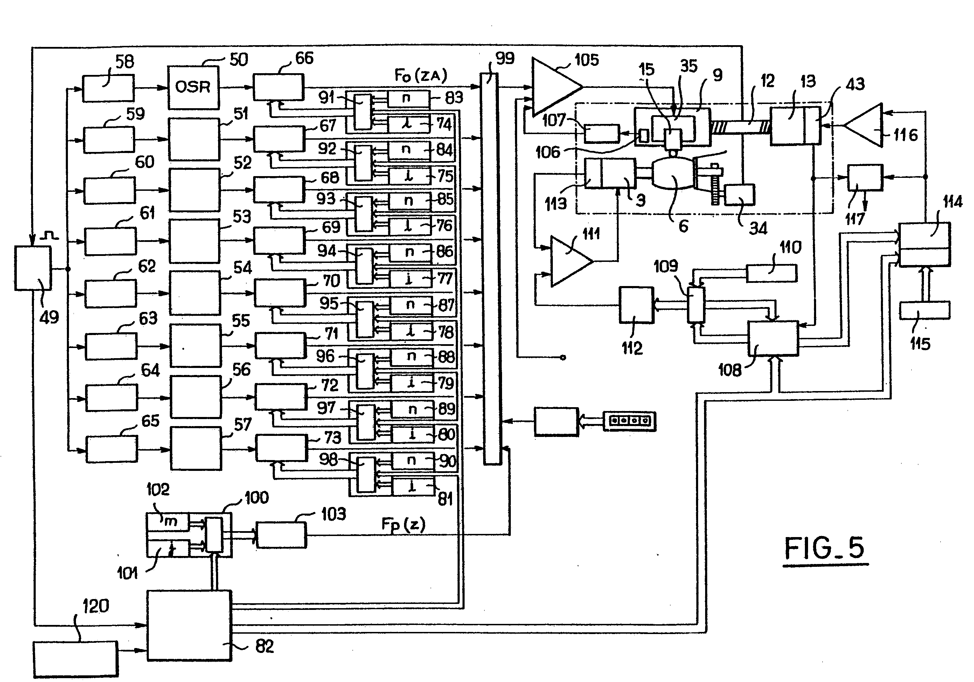

Le mode de commande de la machine ainsi que l'élaboration des calculs pour les consignes d'emplacement de l'outil en fonction de l'angle de rotation de la pièce et du trajet du porte-outils sur l'axe des Z seront maintenant décrits, en se référant à la figure 4 qui est un tableau synoptique fonctionnel et à la figure 5 qui est un schéma des circuits de calcul.

A la figure 4 on a schématiquement représenté la pièce à usiner 6, montée en rotation autour d'un axe Z en bout duquel est monté le capteur-codeur 34. La table de chariotage 9 est mobile sur un axe parallèle à l'axe Z et le porte-outils 15 est mobile sur l'axe X, perpendiculaire à l'axe Z.

Les moteurs d'entraînement 3 et 13, respectivement, de la pièce et de la table de chariotage 9 ayant des vitesses de rotation prédéterminées, des consignes doivent être fournies au moteur d'avancement 35—39 du porte-outils 15 sur l'axe X.

A cet effet, comme il a été dit, le capteur-codeur 34, qui est du type angulaire incrémental, génère 840 impulsions, par tour de la pièce, adressées au système de commande et de synchronisation 139, d'où partent en temps réel les consignes d'asservissement au moteur de broche 3, au moteur de déplacement 35—39 de l'outil et au moteur de déplacement 13 du chariot. De même, en temps réel, le système de commande 139 fait appel à la mémorisation 143 et à la gestion des données 144, l'entrée des données 145 étant en liaison directement avec la gestion des données 144 et le système de commande 139.

Cette disposition correspond à une réalisation des différentes fonctions au moyen de microprocesseurs en tranches travaillant sur 16 ou 32 bits que l'on trouve maintenant sur le marché. Une telle disposition est beaucoup plus simple et moins onéreuse qui si l'on faisait appel aux techniques classiques de la commande numérique par calculateur en temps réel.

A la figure 5 on retrouve les mêmes éléments avec les mêmes références. On a représenté en 3 le moteur d'entraînement de la pièce et en 13 le moteur de la vis d'entraînement du chariot 9, auxquels sont associés respectivement les capteurs ou codeurs 34 et 43. Le moteur électromagnétique du porte-pièce a été schématisé en 35. Le codeur 34 émet 840 impulsions par tour qui, après mise en forme dans le changeur 49, sont fournies à une série de huit oscillateurs sinusoïdaux synchronisables, modulables en fréquence ("wobulables") et redéclenchables ("retriggerables"), par abrégé OSR 50 à 57 destinés à fournir des fonctions sinusoïdales correspondant à chacun des huit termes de la série de Fourier, chacun d'eux recevant par l'intermédiaire d'un diviseur 58 à 65 une impulsion d'une durée de 1/840, 2/840 ... 8/840 ou 1/840, 1/420 ... 1/105, la sortie fournissant une fonction cosinusoïdale $1-\cos \alpha$, $1-\cos 2 \alpha$, ... $1-\alpha\cos 8 \alpha$, $\alpha$ étant par définition égal à 1/840.

Ces impulsions sont rigoureusement en phase et sont ensuite adressées à un multiplicateur 66 à 73 chargé de fournir le terme $a_i$ $(1-\cos iA)$, $a_i$ étant le coefficient dépendant à la fois de Z (section sur l'axe des Z) et de la position A de la pièce en rotation (angle à partir de l'origine). Des incréments de ces coefficients sont calculés d'avance et mis en mémoire dans des mémoires 74 à 81, d'où ils sont adressés à l'instant variable fourni par un synchronisateur général 82 recevant les impulsions du codeur après mise en forme et chargé de synchroniser les différentes opérations de l'appareil.

En l'espèce, les incréments mémorisés sont multipliés numériquement par une quantité n, qui est fonction des données géométriques de base, de A et de la cote Z et mémorisée dans une mémoire 83 à 90, dans un convertisseur numérique-analogique, respectivement 91 à 98.

Le résultant à la sortie de chacun des différents multiplicateurs est additionné dans un calculateur 99 pour fournir le terme représentant la fonction d'ovalité Fo (Z, A). Le calculateur 99 reçoit par ailleurs un courant représentant le terme fonction de profil Fp (Z) fourni par des impulsions calibrées en amplitude et durée, provenant d'un ensemble de mémoires 100 comportant une mémoire 101, des coefficients $a_i$ et une mémoire 102, des multiplicateurs m, et un calculateur numérique analogique de sortie 103.

La sortie du claculateur 99 est fournie à un ampli 105 chargé de délivrer le courant de charge proportionnel à chaque instant au courant de commande et destiné à alimenter la bobine réglant l'emplacement de l'outil sur l'axe des X.

A titre d'exemple, pour définir le profil suivant la fonction Fp (Z), on se donne 50 points le long de l'axe de révolution de la pièce, donc 50 plans de section; pour passer de la valeur de profil p d'un des plans à la valeur p' du plan suivant, il faut ajouter algébriquement une valuer dp. Si à dp correspond un coefficient $a_j$, pour former $a_i$ on enverra m fois un incrément j, m étant le nombre entier de spires ou tours de la pièce pour passer d'un plan au suivant.

Pour définir l'ovalité Fo (Z), on se donne 10 sections dans chacune desquelles on calcule préalablement pour 8 points les valeurs des $a_i$ correspondants, et cela pour chacun des 8 harmoniques, c'est-à-dire que l'on calcule pour chaque section l'ensemble des coefficients du tableau:

| 1er harmonique | 2ème harm. | 8ème harm. | |
|---|---|---|---|
| $a_{1,1}$ | $a_{1,2} \ldots$ | $a_{1,8}$ | pour le 1er point sur la section |
| $a_{2,1}$ | $a_{2,2}$ | $a_{2,8}$ | le 2ème point |
| $a_{8,1}$ | | $a_{8,8}$ | le 8ème point |

On détermine l'incrément i pour chaque point et chaque harmonique que l'on envoie un nombre n de fois, n étant le nombre entier de spires pour aller d'un plan de définition au suivant, sur un tour l'incrément étant envoyé en 840/8=105 fois.

Le calcul d'interpolation est effectué préalablement par une calculatrice annexe 120 à qui on fournit pour le profil: les valeurs correspondant aux 50 plans de coupe de profil du coefficient $a_j$, et le nombre d'interpolations m correspondant au nombre de fois où la correction pour profil sera injectée dans le calculateur 99 par spire entre deux sections voisines, et pour l'ovalité les coefficients d'harmoniques $a_{1,1} \ldots a_{8,8}$ pour les 8 points de chacune des 10 sections, ainsi que le nombre d'interpolations n pour passer d'un point au point homologue de la section suivante.

En pratique la claculatrice 120 déterminera elle-même ces données à partir des données géometriques de la surface à usiner.

La calculatrice 120 fournit les résultats aux mémoires 101, 102 d'une part pour le profil, 74 à 81 et 83 à 90 pour l'ovalité, où elles constituent des données qui seront envoyées à l'instant voulu, déterminé par la séquence des impulsions fournies par le codeur 34 au calculateur 99 pour donner un courant variable en emplitude, donc en intensité, à l'amplificateur 105.

La commande est complétée par un contrôle de deux comparateurs 106—107 vérifiant à chaque instant la position de l'outil et, si besoin, agissant en conséquence sur l'ampli, et de même par un contrôle du moteur d'entraînement de la pièce à partir d'un séquenceur 108 ayant un lecteur 109 d'un programme sur bande 110, le courant étant fourni au moteur 3 par un variateur 111 recevant des instructions du séquenceur par l'intermédiaire d'un convertisseur numérique-analogique 112 et d'autre part d'un contrôleur de rotation 113.

Le séquenceur 108 lui-même, sous le contrôle du synchronisateur général 82, fournit également des indications au dispositif de commande 114 du moteur 13, qui reçoit ses instructions d'une bande enregistrée ⁃ 115 et délivre des impulsions au variateur 116 fournissant le courant de charge au moteur. Une liaison entre le capteur 43 et le séquenceur 108 permet de réguler le courant d'entrée par un contrôleur 117 suivant une technique bien connue.

Suivant la disposition de l'invention, on voit que l'on réalise une génération numérique-analogique très rapide des harmoniques, peu onéreuse, à faible distorsion et sans réglage, avec suppression de tables des valeurs sin et cos, et cela en mettant en mémoire seulement un petit nombre d'informations relatives à la forme à usiner, qui peut être très complexe.

**Revendications**

1. Procédé pour l'usinage de surfaces de révolution évolutives telles que les surfaces latérales des pistons de moteurs à combustion interne, dont les génératrices sont curvilignes et les sections sont elliptiques, au moyen d'une machine-outil comportant une broche (2) de rotation de pièce, un mandrin (4) à prise de pièce et indexage, et un capteur de position de pièce (34), et d'autre part une table de chariotage (9) à guidage sur glissières parallèles à l'axe de la broche, cette table portant un ensemble porte-outils (10) mobile transversalement par rapport audit axe, la position de l'outil en fonction de la surface de révolution à engendrer sur la pièce étant définie à partir de l'angle de rotation de ladite pièce et de la position de l'outil le long de cet axe de rotation et étant réglée par un asservissement commandant la position relative outil-pièce, cet asservissement comportant des moyens pour déterminer à chaque instant la valeur de l'angle A définissant la position angulaire de la pièce et d'autre part des moyens pour déterminer la position longitudinale Z du porte-outils, caractérisé en ce que lesdits moyens d'asservissement comportent une calculatrice électronique qui calcule un temps réel les valeurs d'une fonction Fr (Z, A)=Fp Z+Fo (Z, A) dont les constantes sont déterminées à l'avance, les fonctions Fp et Fo définissant les courbures du profil et de l'ovalité de la section en fonction d'une cote axiale Z et d'un angle de repérage A, et Fo (Z, A) étant calculé par un nombre restreint de termes d'une série de Fourier du type

$$\sum_{1}^{n} a_i \, (1 - \cos iA)$$

pour des valeurs de Z déterminées à l'avance, la sortie de la calculatrice commandant le moteur de réglage de position de l'outil sur son axe par un courant variable en intensité.

2. Procédé selon la revendication 1, dans lequel le nombre des termes de la série de Fourier calculés est limité à huit, le nombre des sections de référence étant limité à 50 pour le profil et à dix pour l'ovalité, la valeur des cotes pour les positions intermédiaires de l'outil étant calculée par la calculatrice par interpolation, de préférence linéaire pour les termes de la série de Fourier.

3. Procédé selon la revendication 2, dans lequel les signaux de sortie de la calculatrice sont sous la dépendance d'un codeur associé au mouvement de rotation de la pièce qui émet des impulsions dont le nombre est de l'ordre de 840 par tour de rotation de la pièce, pour commander la distance outil-axe de la pièce.

4. Machine-outil par la mise en oeuvre du procédé selon la revendication 1, cette machine comportant une broche (2) de rotation de la pièce et mandrin (4) à prise de pièce et indexage, un capteur de position de pièce (34), une table de chariotage (9) à guidage sur glissière parallèles à l'axe de la broche, cette table portant un ensemble porte-outils (10) mobile transversalement par rapport audit axe, un dispositif de commande associée effectuant à chaque instant, la commande et le contrôle de la position de l'outil par rapport à l'axe de la broche, en fonction de l'angle de rotation de la broche et du déplacement de la table de chariotage sur son axe, cette machine étant caractérisée en ce que le ou les outils sont portés à l'extrémité d'un barreau porte-outils (5) muni de moyens anti-rotation (19—24) mais pouvant prendre un mouvement de translation sur son axe, ce barreau étant monté à coulissement à l'intérieur d'un boîtier (21), des moyens moteurs (35—40—41) de déplacement de l'outil sur son axe (x) pour transformer rapidement les signaux dudit dispositif de commande en un déplacement correspondant du porte-outils (15), lesdits moyens moteurs (35—40) étant prévus entre le boîtier et le barreau pour déplacer ce dernier en translation et étant constitués par un aimant permanent annulaire (40—41) solidaire du boîtier et une bobine électrique (35) solidaire du barreau et pénétrant dans un entrefer de l'aimant et ainsi que des moyens capteurs de position (43) repérant à chaque instant la position de l'outil par rapport à une position d'origine, ledit dispositif de commande comportant une mémoire et un calculateur électronique effectuant à chaque instant, le calcul, la commande et le contrôle de la position de l'outil.

5. Machine selon la revendication 4, caractérisée en ce que le capteur (43) est porté à glissement par le boîtier dans l'axe du barreau et est relié à ce dernier par une tige articulée (45) s'étendant dans l'axe de l'aimant permanent et de la bobine.

6. Machine selon la revendication 4, caractérisée en ce que le boîtier (21) a une forme annulaire et est monté à rotation dans le corps de la table de chariotage.

7. Machine selon la revendication 4, caractérisée en ce que le barreau (15) porte à son extrémité un plateau (28) sur lequel sont montés une pluralité d'outils, l'axe (17) du barreau étant décalé par rapport à l'axe (31) du boîtier annulaire qui le porte de sorte que, par rotation du boîtier au moyen d'un vérin, il est possible d'amener successivement chaque outil en position de travail.

8. Machine selon la revendication 4, caractérisée en ce que le barreau est porté par le boîtier au moyen de paliers hydrostatiques (16).

9. Machine selon la revendication 4, caractérisée en ce que le dispostif de commande électronique comporte des capteurs de position (34, 48) sur chacun des axes de rotation de la broche de la vis de chariotage et de l'outil, le capteur d'extrémité de broche (34) émet une impulsion par tour/840, des oscillateurs synchronisables (50, 57) reçoivent ces impulsions après mise en forme et extension en durée, respectivement de quantité de 1 à 8, des multiplicateurs (66—73) multipliant ces impulsions par des coefficients dont les éléments sont préalablement mis en mémoire et correspondant d'une part à la section de la pièce dans laquelle travaille l'outil, et d'autre part à l'emplacement sur cette section, un additionneur (99) faisant ensuite d'adition des impulsions entre elles puis avec une impulsion correspondant au point de profil considéré, l'impulsion étant enfin transmise à un ampli (105) chargé de délivrer un courant proportionnel au moteur électromagnétique (35) du support d'outil.

**Patentansprüche**

1. Verfahren zum Formen von Evolutionsdrehflächen, wie Seitenflächen von Kolben für Verbrennungsmotore, deren Mantellinien gekrümmt und deren Querschnitte elliptisch sind, vermittels einer Werkzeugmaschine, welche eine das Werkstück drehende Spindel (2), sowie einen Dorn (4) zum Halten des Werkstücks und zum Indexieren, und einen Fühler (34) zum Ermitteln der Stellung des Werkstücks, ferner einen Arbeitstisch (9) aufweist, der in zur Achse der Spindel parallelen Gleitführungen geführt ist und eine quer zu dieser Achse bewegliche Werkzeughaltereinheit (10), wobei die Stellung des Werkzeugs in Abhängigkeit von der auf dem Werkstück zu bildenden Drehfläche unter Zugrundelegung des Drehwinkels dieses Werkstücks und der Lage des Werkzeugs längs der Drehachse bestimmt und vermittels einer Servovorrichtung gesteuert wird, die die relative Lage des Werkzeugs und des Werkstücks einstellt und einerseits Mittel aufweist, welche zu jedem Zeitpunkt den Wert des Winkels A ermitteln, der die Winkellage des Werkstücks definiert, ferner Mittel zur Bestimmung der Längslage Z des Werkzeugshalters, dadurch gekennzeichnet, dass die Servomittel eine elektronische Rechenvorrichtung aufweisen, die die in wirklicher Zeit ausgedrückten Werte einer Funktion

$$Fr\ (Z,\ A) = Fp\ Z + Fo\ (Z,\ A)$$

berechnet, deren Konstanten on voraus bestimmt sind, wobei die Funktionen Fp und Fo die Krümmungen des Profils und die Unrundheit des Querschnitts in Abhängigkeit von einer axialen Grösse Z und von einem Bezugswinkel A bestimmen, und wobei Fo (Z, A) vermittels einer begrenzten Anzahl von Gliedern einer Fourier-Reihe des Typs

$$\sum_{1}^{n} a_i (1-\cos iA)$$

für im voraus bestimmte Werte von Z berechnet wird, während die Rechenvorrichtung den die Stellung des Werkzeugs auf dessen Achse bestimmenden Stellmotor vermittels eines Stromes mit veränderlicher Stromstärke steuert.

2. Verfahren nach Anspruch 1, bei dem die Anzahl der berechneten Glieder der Fourier-Reihe auf acht begrenzt ist, während die Anzahl der Bezugsquerschnitte für das Profil auf 50 und für die Unrundheit auf zehn begrenzt ist, wobei die Grössen für die Zwischenstellungen des Werkzeugs von der Rechenvorrichtung durch vorzugsweise lineare Interpolation für die Glieder der Fourier-Reihe berechnet werden.

3. Verfahren nach Anspruch 2, bei dem die Ausgangssignale der Rechenvorrichtung einer der Drehbewegung des Werkstücks zugeordneten Kodiervorrichtung unterworfen sind, die zwecks Steuerung des Abstandes zwischen dem Werkzeug und der Werkstückachse etwa 840 Impulse pro Umdrehung des Werkstücks abgibt.

4. Werkzeugmaschine zur Ausführung des Verfahrens nach Anspruch 1, mit einer das Werkstück drehenden Spindel (2), einem Dorn (4) zum Halten des Werkstücks und zum Indexieren, einem Fühler (34) zum Abfühlen der Stellung des Werkstücks, einem in zur Achse der Spindel parallelen Gleitführungen geführten Arbeitstisch (9), der eine quer zu dieser Achse bewegliche Werkzeughaltereinheit (10) trägt, einer zugeordneten Steuervorrichtung, die in jedem Zeitpunkt die Stellung des Werkzeugs in bezug auf die Spindelachse in Abhängigkeit vom Drehwinkel der Spindel und von der axialen Bewegung des Arbeitstisches steuert und kontrolliert, dadurch gekennzeichnet, dass das bzw. die Werkzeuge am Ende einer Werkzeugsträgerstange (15) gehaltert sind, die mit drehungsverhindernden Mitteln (19—24) versehen, jedoch längs ihrer Achse beweglich und gleitbar in einem Gehäuse (21) angeordnet ist, wobei Betätigungsmittel (35—40—41) zum Bewegen des Werkzeugs längs seiner Achse (x) zwecks rascher Umwandlung der Signale der Steuervorrichtung in eine entsprechende Bewegung des Werkzeugshalters (15) vorgesehen und diese Betätigungsmittel (35—40) zwischen dem Gehäuse und der Stange angeordnet sind, um die letztere geradlinig zu verschieben, wobei diese Betätigungsmittel aus einem mit dem Gehäuse fest verbundenen, ringförmigen Dauermagneten (40—41) und einer mit der Stange fest verbundenen, in einen Luftspalt des Magneten hineinragenden Elektrospule (35) bestehen, und wobei Stellungsfühlermittel (43) vorgesehen sind, die in jedem Zeitpunkt die Stellung des Werkzeugs in bezug auf eine Ausgangsstellung ermitteln, während die Steuervorrichtung einen Speicher und eine elektronische Rechenvorrichtung aufweist, welche zu jedem Zeitpunkt die Stellung des Werkzeugs berechnet, steuert und kontrolliert.

5. Maschine nach Anspruch 4, dadurch gekennzeichnet, dass der Fühler (43) in Richtung der Achse der Stange gleitbar im Gehäuse gelagert und mit der Stange über einen sich längs der Achse des Dauermagnaten und der Spule erstreckenden Gelenkstab (45) verbunden ist.

6. Maschine nach Anspruch 4, dadurch gekennzeichnet, dass das Gehäuse (21) eine ringförmige Form besitzt und drehbar im Arbeitstisch gelagert ist.

7. Maschine nach Anspruch 4, dadurch gekennzeichnet, dass die Stange (15) an ihrem Ende eine Platte (28) trägt, auf welcher eine Merhzahl von Werkzeugen angeordnet ist, wobei die Achse (17) der Stange in bezug auf die Achse (31) des die letztere tragenden ringförmigen Gehäuses derart versetzt ist, dass alle Werkzeuge nacheinander durch Drehen des Gehäuses vermittels eines Drucktopfes in die Arbeitsstellung bringbar sind.

8. Maschine nach Anspruch 4, dadurch gekennzeichnet, dass die Stange vom Gehäuse durch hydrostatische Lager (16) getragen wird.

9. Maschine nach Anspruch 4, dadurch gekennzeichnet, dass die elektronische Steuervorrichtung auf jeder der Drehachsen der Schlittenschraubenspindel und des Werkzeugs angeordnete Stellungsfühler (34, 48), wobei der am Ende der Schlittenschraube angeordnete Fühler (34) einen Impuls pro 1/840 Umdrehung abgibt und synchronisierbare Oszillatoren (50, 57) diese Impulse nach Formgebung und Zeitdehnung in einer Menge von 1 bzw. 8 empfangen, wobei Multiplier (66—73) diese Impulse mit Koeffizienten multiplizieren, die zuvor gespeichert wurden und einerseits dem von Werkzeug bearbeiteten Querschnitt des Werkstücks und andererseits der Lage dieses Querschnitts entsprechen, und wobei ein Adder (99) sodann diese Impulse miteinander und danach mit einem dem betreffenden Profilpunkt entsprechenden Impuls addiert, während schliesslich der Impuls an einen Verstärker (105) übertragen wird, der den elektromagnetischen Motor (35) des Werzeughalters mit einem proportionalen Strom speist.

## Claims

1. A process for forming evolutive surfaces of revolution, such as the lateral surfaces of internal combustion motor pistons, the gene-ratices of which are curved and the cross-sections of which are elliptical, by means of a tool-machine comprising a spindle (2) for rotating the work piece, a chuck (4) for holding the work piece and for indexing, and a work piece position detector (34), and further comprising a work table (9) guided in grooves parallel to the axis of the spindle, said table bearing a tool-holder assembly (10) which is transversely movable with respect to said axis, the position of the tool, with respect to the surface of revolution to be formed, being defined on the basis of the angle of rotation of said piece and the position of the tool along the said axis of rotation, and being adjusted by servo means controlling the relative position of the tool and the piece, said servo means comprising means for determining at every moment the value of angle A defining the angular position of the piece and, on the other hand, means for determining the longitudinal position Z of the tool-holder, characterized in that said servo means comprise an electronic computer which computes, in real time, the values of a function

$$Fr\ (Z,\ A) = Fp\ Z + Fo\ (Z,\ A)$$

the constants of which are previously determined, the functions Fp and Fo defining the curvatures of the profile and of the oval shape of the cross-section as a function of an axial co-ordinate Z and a reference angle A, while Fo (Z, A) is calculated by a reduced number of terms of a Fourier series of the type

$$\sum_{1}^{n} a_i\ (1 - \cos\ iA)$$

for values of Z which are previously determined, the output of the computer controlling, by means of a current of variable intensity, the motor which adjusts the position of the tool along its axis.

2. A process according to claim 1, wherein the number of calculated terms of the Fourier series is limited to eight, the number of reference cross-sections being limited to 50 for the profile and to ten for the oval shape, the value of the co-ordinates for the intermediary positions of the tool being computed by the computer by means of preferably linear interpolation for the terms of the Fourier series.

3. A process according to claim 2, wherein the output signals issuing from the computer are governed by a coding device associated to the rotary motion of the piece, which emits pulses the number of which is equal to about 840 per revolution of the piece, so as to control the distance between the tool and the piece.

4. A tool machine for carrying out the process according to claim 1, comprising a spindle (2) for rotating the work piece, a chuck (4) for holding the piece and for indexing, a piece position detector (34), a work table (9) guided by grooves parallel to the spindle axis, said table supporting a tool-holder assembly (10) movable transversely with respect to said axis, an associated control device controlling and checking at every moment the position of the tool with respect to the spindle axis, as a function of the angle of rotation of the spindle and as a function of the displacement of the work table along its axis, said machine being characterized in that the tool or tools are supported at the end of a tool-holding bar (15) provided with anti-rotational means (19—24), but adapted to effect a translational displacement along its axis, said bar being slidingly mounted in a casing (21), motive means (35—40—41) being provided for displacing the tool along its axis (x) with a view to rapidly converting the signals of said control means into a corresponding displacement of the tool-holder (15), said motive means (35—40) being disposed between the casing and the bar for moving the latter translationally, and being constituted by an annular permanent magnet (40—41) integral with the casing, and an electric coil (35) integral with said bar and protruding into an air-gap of the magnet, position detecting means (43) being provided and adapted to detect at every instant the position of the tool relative to an initial position, said control device comprising a memory and an electronic computer which computes, controls and checks at every moment the position of the tool.

5. A machine according to claim 4, characterized in that the detector (43) is slidingly mounted on the casing so as to be movable along the axis of said bar, said detector being connected to said bar by a hinged rod (45) extending along the axis of the permanent magnet and the coil.

6. A machine according to claim 4, characterized in that said casing (21) has an annular shape and is rotatively mounted in the body of said work table.

7. A machine according to claim 4, characterized in that said bar (15) supports at its end a plate (28) bearing a plurality of tools, the axis of the bar being offset with respect to the axis (31) of the annular casing by which it is supported, in such a manner that said tools are adapted to bring successively into a working position by rotating said casing by means of a jack.

8. A machine according to claim 4, characterized in that said bar is supported by said casing through the intermediary of hydrostatic bearings (16).

9. A machine according to claim 4, characterized in that the electronic control device comprises position detectors (34, 38) located on each one of the rotating axes of the spindle of the slide screw and of the tool, the detector at the end of the spindle emitting one pulse per 1/840 revolution, while synchronizable oscillators (50, 57) receive these pulses after their shaping and extension in time, in a respective quantity of 1 to 8, multipliers (66, 73) being provided for multiplying said pulses by coefficients the elements of which are previously stored, and which correspond on the one hand to that cross-section of the piece which is being machined by the tool, and on the other hand to the location of said cross-section, whereas an adding device (99) then adds said pulses to each other and afterwards to a pulse corresponding to the related point of the profile, the pulse being finally transmitted to an amplifier (105) adapted to deliver a proportional current to the electromagnetic motor (35) of the tool-holder.

FIG_1

0 043 741

FIG_2

33

11

134a

134b

21

30°

24

22

23

30

17

31

30°

29

## FIG_3

FIG_4

0 043 741

FIG.5

0 043 741